# EUROPEAN PATENT APPLICATION

(11) **EP 2 876 271 A1**
(43) Date of publication of application: **27.05.2015**
(21) Application number: 12881666.7
(22) Date of filing: 23.07.2012
(51) Int. Cl.: F01N 3/28, F01N 3/02

(54) **EXHAUST PURIFIER FOR INTERNAL-COMBUSTION ENGINE**

(71) Applicant: Toyota Jidosha Kabushiki Kaisha, Toyota-shi, Aichi 471-8571 (JP)
(72) Inventor: OTSUKI, Hiroshi, Toyota-shi Aichi 471-8571 (JP); NAKAYAMA, Shigeki, Toyota-shi Aichi 471-8571 (JP); NISHIOKA, Hiromasa, Toyota-shi Aichi 471-8571 (JP); IMAI, Daichi, Toyota-shi Aichi 471-8571 (JP)
(74) Representative: Raynor, Stuart Andrew
(86) International application number: PCT/JP2012/068601
(87) International publication number: WO 2014/016890

(57) **Abstract**

In an exhaust passage in an internal-combustion engine in which combustion occurs with excessive oxygen, an upstream particulate filter (24u) and a downstream particulate filter (24d) are disposed in series in order to capture particulate matter included in an exhaust gas. The upstream particulate filter and the downstream particulate filter hold an upstream catalyst and a downstream catalyst having an oxidation function, respectively. The downstream catalyst is set to have a higher oxidization capability for particulate matter than the upstream catalyst.

## Description

### Technical Field

The present invention relates to an exhaust purification system of an internal combustion engine.

### Background Art

Known in the art is an exhaust purification system for an internal combustion which burns fuel under an excess of oxygen wherein an upstream side particulate filter and a downstream side particulate filter are arranged in series in an engine exhaust passage for trapping particulate matter which is contained in the exhaust gas and the upstream side particulate filter and the downstream side particulate filter respectively carry catalysts which have oxidation functions (see PLT 1). In this exhaust purification system, the exhaust gas successively passes through the upstream side particulate filter and the downstream side particulate filter. Particulate matter is trapped at the upstream side particulate filter. Even if particulate matter passes through the upstream side particulate filter, it is trapped at the downstream side particulate filter. As a result, the particulate matter is suppressed from being released into the atmosphere.

On the other hand, in an internal combustion engine, fuel is burned under an excess of oxygen. The upstream side particulate filter and the downstream side particulate filter are therefore in an oxidizing atmosphere. Therefore, if the upstream side particulate filter and the downstream side particulate filter become relatively high in temperature, the particulate matter which is trapped at the upstream side particulate filter and the downstream side particulate filter is oxidized by the catalysts and is removed from the upstream side particulate filter and the downstream side particulate filter. As a result, the pressure losses of the upstream side particulate filter and the downstream side particulate filter are suppressed from increasing due to the particulate matter.

### Citations List

### Patent Literature

PLT 1: Japanese Patent Publication No. 2012-013059A

### Summary of Invention

### Technical Problem

In this regard, exhaust gas contains nonburnable ingredients called "ash". This ash is trapped together with the particulate matter at the upstream side particulate filter and downstream side particulate filter. In this regard, even if the temperatures of the upstream side particulate filter and the downstream side particulate filter become temperatures where the particulate matter can oxidize, the ash will not burn or vaporize.

On the other hand, if particulate matter is removed from the upstream side particulate filter and the downstream side particulate filter, that is, if the amount of particulate matter which covers the surfaces of the partition walls of the upstream side particulate filter and the downstream side particulate filter becomes smaller, part of the ash will pass through the partition walls and be removed from the upstream side particulate filter and the downstream side particulate filter. As a result, the pressure losses of the upstream side particulate filter and the downstream side particulate filter are suppressed from increasing due to the ash.

However, the temperature of the downstream side particulate filter is often lower than the temperature of the upstream side particulate filter. Therefore, the amount of the particulate matter which is trapped at the downstream side particulate filter is liable to be unable to be reduced. As a result, the ash may not pass through the partition walls of the downstream side particulate filter and may build up at the downstream side particulate filter whereby the pressure loss of the downstream side particulate filter is liable to increase. Further, if the ash remains on the downstream side particulate filter over a long period of time, the particles of the ash will aggregate with each other and the ash is liable to become larger in particle size. If the ash becomes larger in particle size in this way, it becomes further harder for the ash to pass through the partition walls.

### Solution to Problem

According to the present invention, there is provided an exhaust purification system for internal combustion engine which burns fuel under an excess of oxygen wherein an upstream side particulate filter and a downstream side particulate filter are arranged in series in an engine exhaust passage for trapping particulate matter, these upstream side particulate filter and downstream side particulate filter respectively carry an upstream side catalyst and a downstream side catalyst which have oxidation functions, and the particulate matter oxidizing ability of the downstream side catalyst is set higher than the particulate matter oxidizing ability of the upstream side catalyst.

Preferably, the downstream side particulate filter is comprised of a wall flow type particulate filter and the pore size of the downstream side particulate filter is set so that ash can pass through the downstream side particulate filter.

Preferably, the upstream side particulate filter is comprised of a wall flow type particulate filter and the pore size of the upstream side particulate filter is set so that ash can pass through the upstream side particulate filter.

Preferably, the upstream side catalyst includes a base metal oxide.

Preferably, the downstream side catalyst includes a precious metal.

### Advantageous Effects of Invention

The particulate matter is reliably removed from the downstream side particulate filter, so the pressure loss of the downstream side particulate filter can be suppressed from increasing due to the ash.

### Brief Description of Drawings

FIG. 1 is an overview of an internal combustion engine.
FIG. 2A is a front view of a particulate filter.
FIG. 2B is a side cross-sectional view of a particulate filter.
FIG. 3 is a schematic enlarged view of the upstream side catalyst and the downstream side catalyst.
FIG. 4 is a graph which shows the speeds of oxidation of the particulate matter of the upstream side catalyst and the downstream side catalyst.
FIG. 5 is a view which shows another embodiment of the upstream side particulate filter and the downstream side particulate filter.

### Description of Embodiments

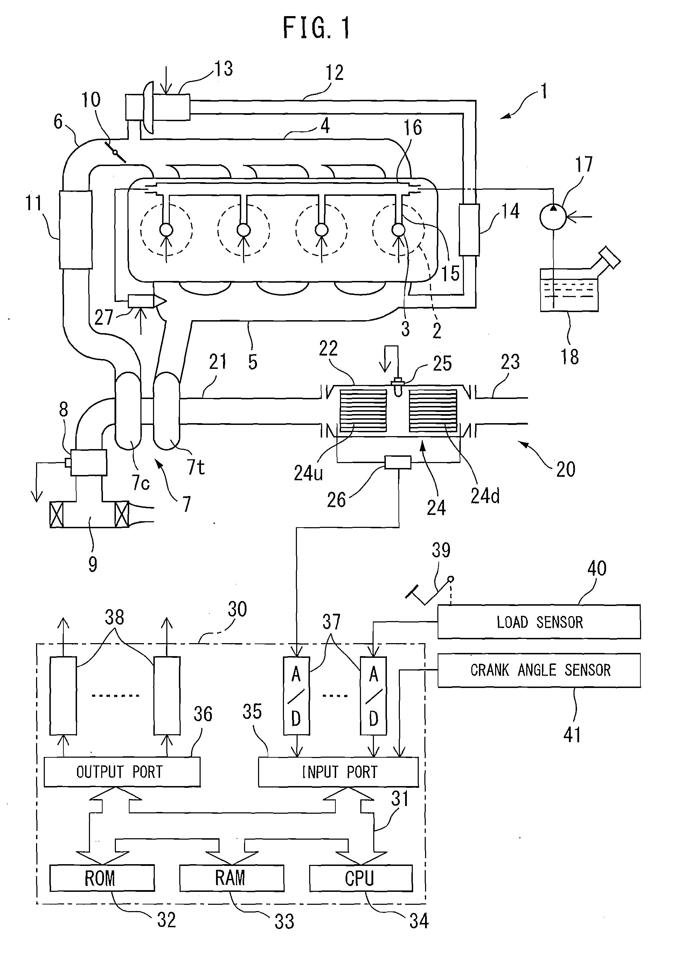

Referring to FIG. 1, 1 indicates a body of a compression ignition type internal combustion engine, 2 a combustion chamber of each cylinder, 3 an electronic control type fuel injector for injecting fuel into each combustion chamber 2, 4 an intake manifold, and 5 an exhaust manifold. The intake manifold 4 is connected through an intake duct 6 to an outlet of a compressor 7c of an exhaust turbocharger 7, while the inlet of the compressor 7c is connected through an air flowmeter 8 to an air cleaner 9. Inside the intake duct 6, an electrical control type throttle valve 10 is arranged. Furthermore, around the intake duct 6, a cooling device 11 is arranged for cooling the intake air which flows through the intake duct 6. On the other hand, the exhaust manifold 5 is connected to an inlet of the exhaust turbine 7t of the exhaust turbocharger 7, while an outlet of the exhaust turbine 7t is connected to an exhaust post treatment device 20.

The exhaust manifold 5 and the intake manifold 4 are connected with each other through an exhaust gas recirculation (hereinafter referred to as "EGR") passage 12. Inside the EGR passage 12, an electrical control type EGR control valve 13 is arranged. Further, around the EGR passage 12, a cooling device 14 is arranged for cooling the EGR gas which flows through the inside of the EGR passage 12. On the other hand, each fuel injector 3 is connected through a fuel runner 15 to a common rail 16. This common rail 16 is supplied with fuel from an electronically controlled type of variable discharge fuel pump 16. The fuel which is supplied into the common rail 16 is fed through fuel runners 15 to the fuel injectors 3. In the embodiment which is shown in FIG. 1, this fuel is comprised of diesel fuel. In another embodiment, the internal combustion engine is comprised of a spark ignition type internal combustion engine. In this case, the fuel is comprised of gasoline.

The exhaust post-treatment device 20 is provided with an exhaust pipe 21 which is connected to the outlet of the exhaust turbine 7t, a catalytic converter 22 which is connected to the exhaust pipe 21, and an exhaust pipe 23 which is connected to the catalytic converter 22. Inside the catalytic converter 22, a particulate filter 24 is arranged. The particulate filter 24 is comprised of an upstream side particulate filter 24u and a downstream side particulate filter 24d which are arranged in series in the direction of flow of exhaust. In the embodiment which is shown in FIG. 1, the upstream side particulate filter 24u and the downstream side particulate filter 24d are comprised of wall flow type particulate filters. Further, in the embodiment which is shown in FIG. 1, the upstream side particulate filter 24u and the downstream side particulate filter 24d have substantially the same shapes and therefore have substantially the same capacities.

The catalytic converter 22 is provided with a temperature sensor 25 for detecting the temperature of the particulate filter 24. In another embodiment, a temperature sensor for detecting the temperature of the exhaust gas which flows into the particulate filter 24 is arranged in the exhaust pipe 21. In still another embodiment, a temperature sensor for detecting the temperature of the exhaust gas which flows out from the particulate filter 24 is arranged in the exhaust pipe 23. These temperatures of the exhaust gas express the temperature of the particulate filter 24.

On the other hand, at the exhaust manifold 5, a fuel adding valve 27 is attached. Fuel is supplied to this fuel adding valve 27 from the common rail 16. Fuel is added from the fuel adding valve 27 to the inside of the exhaust manifold 5. In another embodiment, the fuel adding valve 27 is arranged in the exhaust pipe 21.

The electronic control unit 30 is comprised of a digital computer which is provided with components which are connected with each other by a bidirectional bus 31 such as a ROM (read only memory) 32, RAM (random access memory) 33, CPU (microprocessor) 34, input port 35, and output port 36. Output signals of the air flowmeter 8, temperature sensor 25, and pressure difference sensor 26 are input through corresponding AD converters 37 to the input port 35. Further, an accelerator pedal 39 is connected to a load sensor 40 which generates an output voltage proportional to the quantity L of depression of the accelerator pedal 39. The output voltage of the load sensor 40 is input through a corresponding AD converter 37 to the input port 35. Furthermore, a crank angle sensor 41 which generates an output pulse each time the crankshaft rotates by for example 30 degrees is connected to the input port 35. At the CPU 34, the output pulses from the crank angle sensor 41 are used as the basis to calculate the engine speed Ne. On the other hand, the output port 36 is connected through corresponding drive circuits 38 to the fuel injectors 3, a drive device of the throttle valve 10, EGR control valve 13, fuel pump 17, and fuel adding valve 27.

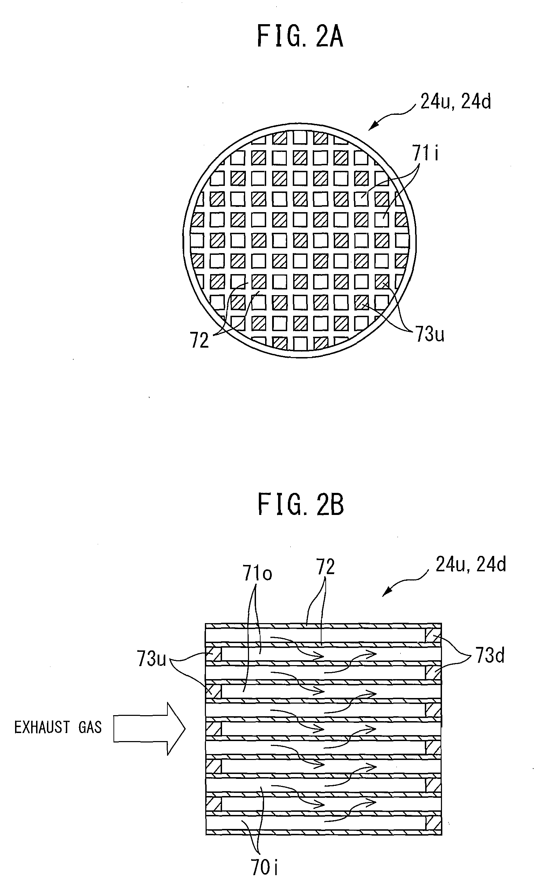

FIG. 2A and FIG. 2B show the structures of the wall flow type upstream side particulate filter 24u and downstream side particulate filter 24d. Note that, FIG. 2A shows a front view of the upstream side particulate filter 24u and the downstream side particulate filter 24d, while FIG. 2B shows a side cross-sectional view of the upstream side particulate filter 24u and the downstream side particulate filter 24d. As shown in FIG. 2A and FIG. 2B, the upstream side particulate filter 24u and the downstream side particulate filter 24d form honeycomb shapes which are provided with pluralities of exhaust flow paths 71i and 71o which extend in parallel with each other and partition walls 72 which separate these exhaust flow paths 71i and 71o from each other. In the embodiment which is shown in FIG. 2A, the exhaust flow paths 71i and 71o are comprised of exhaust gas inflow passages 71i with upstream ends which are open and with downstream ends which are closed by stoppers 73d and exhaust gas outflow passages 71o with upstream ends which are closed by stoppers 73u and with downstream ends which are open. Note that the hatched parts in FIG. 2A show the stoppers 73u. Therefore, the exhaust gas inflow passages 71i and exhaust gas outflow passages 71o are alternately arranged via thin partition walls 72. In other words, in the exhaust gas inflow passages 71i and exhaust gas outflow passages 71o, each exhaust gas inflow passage 71i is surrounded by four exhaust gas outflow passages 71o and each exhaust gas outflow passage 71o is surrounded by four exhaust gas inflow passages 71i.

In another embodiment, the exhaust gas flow paths of one or both of the upstream side particulate filter 24u and the downstream side particulate filter 24d are comprised of exhaust gas inflow paths with upstream ends and downstream ends which are open and exhaust gas outflow passages with upstream ends which are closed by stoppers and with downstream ends which are open. In still another embodiment, the exhaust gas flow paths of one or both of the upstream side particulate filter 24u and the downstream side particulate filter 24d are comprised of exhaust gas flow paths with upstream ends and downstream ends which are open. The upstream side particulate filter and the downstream side particulate filter in this case are also called straight type particulate filters.

The partition walls 72 are formed from a porous material, such as cordierite, silicon carbide, silicon nitride, zirconia, titania, alumina, silica, mullite, lithium aluminum silicate, zirconium phosphate, and other such ceramics. Therefore, as shown in FIG. 2B by the arrows, the exhaust gas first flows into the exhaust gas inflow paths 71i, then pass through the surrounding partition walls 72 and flow out into the adjoining exhaust gas outflow paths 71o.

In the embodiment which is shown in FIG. 2B, the average pore size of the partition walls 72 is set to 25 µm to 50 µm. If the average pore size of the partition walls 72 is 25 µm or more, the majority of the ash which is contained in the exhaust gas can pass through the partition walls 72. On the other hand, if the average pore size of the partition walls 72 is 50 µm or less, the mechanical strength of the partition walls 72 can be secured. In another embodiment, the average pore size of the partition walls 72 is set to 10 µm to 25 µm.

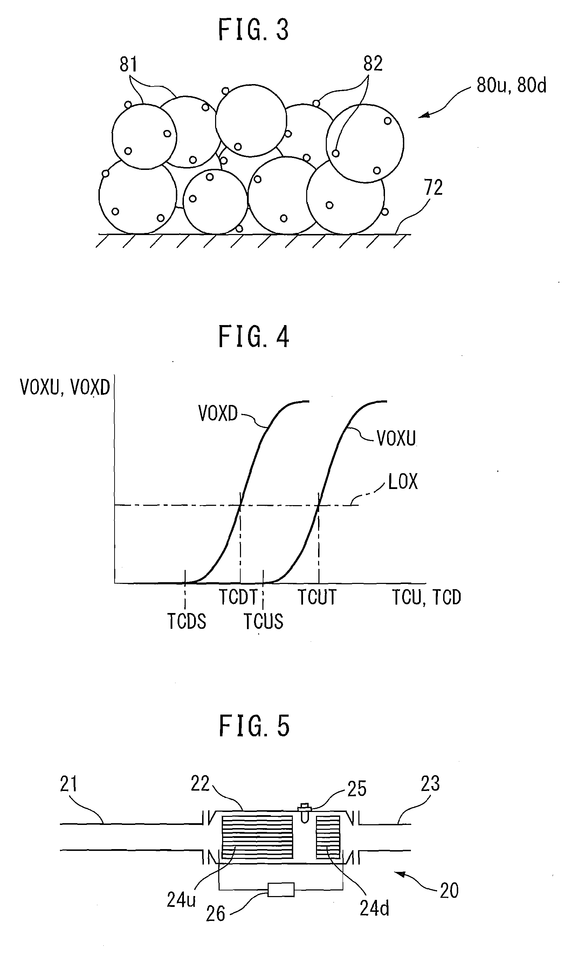

The partition walls 72, that is, the surfaces at the two sides of the partition walls 72 and the wall surfaces inside the pores, of the upstream side particulate filter 24u and the downstream side particulate filter 24d carry the upstream side catalyst 80u and the downstream side catalyst 80d which have oxidation functions, as shown in FIG. 3. The upstream side catalyst 80u and the downstream side catalyst 80d are provided with carriers 81 which are formed from for example alumina and catalyst particles 82 which are carried on the carriers 81. The catalyst particles 82 of the upstream side catalyst 80u are comprised of base metal oxides such as Ce-Ag-O, Ce-Pr-Zr-O, and Cu-V-O. As opposed to this, the catalyst particles 82 of the downstream side catalyst 80d are comprised of precious metals such as platinum Pt, rhodium Rh, and palladium Pd.

FIG. 4 shows the speed of oxidation VOXU of the particulate matter of the upstream side catalyst 80u with respect to the temperature TCU of the upstream side catalyst 80u and the speed of oxidation VOXD of the particulate matter of the downstream side catalyst 80d with respect to the temperature TCD of the downstream side catalyst 80d. As will be understood from FIG. 4, the temperature TCDS at which the downstream side catalyst 80d starts to oxidize the particulate matter is lower than the temperature TCUS at which the upstream side catalyst 80u starts to oxidize the particulate matter. Further, the downstream side catalyst temperature TCDT which is required for making the particulate matter oxidation speed VOXD of the downstream side catalyst 80d the allowable lower limit LOX or more is lower than the upstream side catalyst temperature TCUT which is required for making the particulate matter oxidation speed VOXU of the upstream side catalyst 80u the allowable lower limit LOX or more. In this way, the particulate matter oxidizing ability of the downstream side catalyst 80d is set higher than the particulate matter oxidizing ability of the upstream side catalyst 80u.

Now then, exhaust gas contains particulate matter which is mainly formed from solid carbon. This particulate matter is trapped by the upstream side particulate filter 24u and the downstream side particulate filter 24d. On the other hand, in the combustion chambers 2, fuel is burned under an excess of oxygen. Therefore, unless fuel is secondarily supplied from the fuel injectors 3 and fuel adding valves 27, the upstream side particulate filter 24u and the downstream side particulate filter 24d are in oxidizing atmospheres. As a result, the particulate matter which is trapped at the upstream side particulate filter 24u and the downstream side particulate filter 24d is successively oxidized by the upstream side catalyst 80u and the downstream side catalyst 80d.

On this point, the temperature of the downstream side particulate filter 24d is sometimes lower than the upstream side particulate filter 24u. However, in the embodiment of the present invention, the downstream side catalyst 80u can oxidize the particulate matter even at a relatively low temperature. Therefore, the amounts of the particulate matter which are trapped at upstream side particulate filter 24u and the downstream side particulate filter 24d can be kept small.

Exhaust gas also contains ash. The fact that this ash is mainly formed from a calcium salt such as calcium sulfate CaSO₄ or calcium zinc phosphate Ca₁₉Zn₂(PO₄)₁₄ was confirmed by the present inventors. The calcium Ca, zinc Zn, phosphorus P, etc. are derived from the engine lubricating oil, while the sulfur S is derived from the fuel. That is, if explaining calcium sulfate CaSO₄ as an example, the engine lubricating oil flows into the combustion chambers 2 where it is burned. The calcium Ca in the lubricating oil bonds with the sulfur S in the fuel, whereby calcium sulfate CaSO₄ is produced.

As explained above, the average pore sizes of the upstream side particulate filter 24u and the downstream side particulate filter 24d are set so that the ash can pass through them. Therefore, the ash successively passes through passes through the upstream side particulate filter 24u and the downstream side particulate filter 24d. Therefore, it is possible to suppress the pressure losses of the the upstream side particulate filter 24u and the downstream side particulate filter 24d from increasing due to the ash.

When the amount of the particulate matter which is trapped on the upstream side particulate filter 24u and the downstream side particulate filter 24d, that is, the amount of particulate matter which is deposited on the partition walls 72, is relatively large, that large amount of particulate matter is liable to make it difficult for the ash to pass through the partition walls 72. However, in the embodiment according to the present invention, the amount of particulate matter which is trapped on the upstream side particulate filter 24u and the downstream side particulate filter 24d is kept small. Therefore, the ash can easily pass through the partition walls 72.

Further, in the embodiment according to the present invention, the ash is suppressed from remaining on the upstream side particulate filter 24u and the downstream side particulate filter 24d for a long period of time. Therefore, the ash is suppressed from aggregating on the upstream side particulate filter 24u and the downstream side particulate filter 24d and therefore can easily pass through the partition walls 72.

Note that, in the embodiment according to the present invention, PM removal processing is not performed to remove the particulate matter on the particulate filter 24. PM removal processing is, for example, temperature elevating processing which raises the temperature of the particulate filter 24 to the PM removal temperature (for example, 600°C) so as to remove the particulate matter by oxidation, NOx increase processing which increases the amount of NOx in the exhaust gas which flows into the particulate filter 24 by reducing the amount of EGR gas so as to remove the particulate matter by oxidation by NOx, and ozone supply processing which supplies ozone to the particulate filter 24 from an ozone feeder which is connected to the exhaust passage upstream of the particulate filter 24 so as to remove the particulate matter by oxidation by ozone.

In the embodiments according to the present invention explained up to here, the capacity of the upstream side particulate filter 24u and the capacity of the downstream side particulate filter 24d are substantially equal to each other. In another embodiment as shown in FIG. 5, the capacity of the upstream side particulate filter 24u is made larger than the capacity of the downstream side particulate filter 24d. By doing this, even if the amount of particulate matter which is trapped at the upstream side particulate filter 24u greatly increases, the pressure loss of the upstream side particulate filter 24u is suppressed from increasing.

Further, in the embodiments according to the present invention explained up to here, the average pore size of the upstream side particulate filter 24u and the average pore size of the downstream side particulate filter 24d are substantially equal. In another embodiment, the average pore size of the upstream side particulate filter 24u is made larger than the average pore size of the downstream side particulate filter 24d. By doing this, the amount of the particulate matter which is trapped at the upstream side particulate filter 24u is reduced and the increase in pressure loss of the upstream side particulate filter 24u is suppressed.

### Reference Signs List

- 1: engine body
- 21: exhaust pipe
- 24u: upstream side particulate filter
- 24d: downstream side particulate filter
- 80u: upstream side catalyst
- 80d: downstream side catalyst

## Claims

1. An exhaust purification system for internal combustion engine which burns fuel under an excess of oxygen wherein
an upstream side particulate filter and a downstream side particulate filter are arranged in series in an engine exhaust passage for trapping particulate matter,
these upstream side particulate filter and downstream side particulate filter respectively carry an upstream side catalyst and a downstream side catalyst which have oxidation functions, and
the particulate matter oxidizing ability of the downstream side catalyst is set higher than the particulate matter oxidizing ability of the upstream side catalyst.

2. The exhaust purification system for an internal combustion engine according to claim 1 wherein the downstream side particulate filter is comprised of a wall flow type particulate filter and the pore size of the downstream side particulate filter is set so that ash can pass through the downstream side particulate filter.

3. The exhaust purification system for an internal combustion engine according to claim 1 or 2, wherein the upstream side particulate filter is comprised of a wall flow type particulate filter and the pore size of the upstream side particulate filter is set so that ash can pass through the upstream side particulate filter.

4. The exhaust purification system for an internal combustion engine according to any one of claims 1 to 3, wherein the upstream side catalyst includes a base metal oxide.

5. The exhaust purification system for an internal combustion engine according to any one of claims 1 to 4, wherein the downstream side catalyst includes a precious metal.
